# EUROPEAN PATENT APPLICATION

(11) **EP 3 404 588 A1**
(43) Date of publication of application: **21.11.2018**
(21) Application number: 17171085.8
(22) Date of filing: 15.05.2017
(51) Int. Cl.: G06Q 10/00, G06Q 10/08

(54) **METHOD AND SYSTEM FOR MANAGING A SYSTEM LIFE CYCLE, PARTICULARLY FOR MANAGING A SYSTEM LIFE CYCLE IN THE LIFE SCIENCE INDUSTRY**

(71) Applicant: Cani-IT ApS, 1924 Frederiksberg C (DK)
(72) Inventor: MILTON, Kenn, 1924 Frederiksberg C (DK)
(74) Representative: AWA Denmark A/S

(57) **Abstract**

A method for managing a system life cycle, the method comprising the steps of:
a) choosing a plan template from one or more plan templates created centrally in a first organization, said one or more plan templates each comprising a plurality of module templates and a plurality of task templates,
b) providing specific plan information de-centrally in a second organization,
c) configuring a plan based on the chosen plan template and on the provided specific plan information,
d) configuring, as a part of said plan, a plurality of modules based on said plurality of module object templates and a plurality of tasks based on said plurality of task object templates,
e) defining a plurality of users, associating said users with at least one role of a plurality of roles, and assigning said plurality of users to said plan and/or one or more of said plurality of modules and/or one or more of said plurality of tasks based on said at least one role,
f) configuring an inventory comprising a plurality of inventory items related to each of said plurality of modules and each of said plurality of tasks,
g) detect changes to said plan, particularly to each of said plurality of modules and each of said plurality of tasks, and
h) continuously automatically updating said plurality of inventory items of said inventory based on said detected changes to said plan.

## Description

### Field of invention

The present invention relates to a method and system for managing a system life cycle, particularly for managing a system life cycle in the Life Science industry.

### List of definitions

As used herein the term "system life cycle" is intended to encompass managing at least a part of the whole life cycle of a system. The term "life cycle" as used herein may be the whole life cycle or just a part of the whole life cycle.

As used herein a "system" or "product" is intended to encompass any result or intended result of a research, development and production operation, and more particularly thus any solutions, systems, tools, services, goods or products which are developed, licensed or owned by an organization.

By way of example, in the Life Science industry, a product or system may be a particular drug, and the life cycle of the particular drug may be from making the invention leading to the drug, over the various phases of the development of the drug up to and including selling and marketing the drug and receiving feedback from the consumers to the end-of-life when the product or system is phased out.

As used herein the term "plan" is intended to refer to a plan for managing a system life cycle with two or more relevant modules and one or more tasks.

As used herein the term "module" is intended to encompass any phase of a system life cycle, such as but not limited to documentation, project, knowledge, incidents, changes, configurations, deviations, Corrective And Preventive Actions (CAPAs), tests, training and complaints, including management and handling of any of these. Phases may be sequential or parallel or a combination of sequential modules and parallel modules.

As used herein the term "process" is intended to encompass a collection of tasks associated with a system life cycle and/or module.

As used herein the term "task" is intended to encompass any task associated with a system life cycle and/or a module.

As used herein the terms "plan template", "module template" and "task template", respectively, are intended to refer to predetermined collection of information forming the general foundation of any plan, any module and any task, respectively.

As used herein the term "sub-module" is intended to encompass any sub-part of a module, non-limiting examples being feedback, review, approval, Quality Assurance (QA), post-approval and signature.

As used herein the term "object" is intended to encompass a variable, a data structure, a function, a container of information, or a set of instructions.

As used herein an "organization" is intended to encompass any organization in which a tasks associated with a system life cycle may be carried out, non-limiting examples being private or public corporations, companies, divisions, sub-divisions, project groups, and departments of private or public corporations or companies, such as a research and development department or sales department.

As used herein the term "centrally in an organization" in relation to a process is intended to indicate that the process is executed, i.e. defined and/or managed, e.g. by an administrator, manager or similar, who is authorized by the organization.

As used herein the term "de-centrally" in relation to a process is intended to indicate that the process is executed, i.e. defined and/or managed, de-centrally in an organization, e.g. by any suitable user.

As used herein a "user" is intended to encompass any person associated with an organization. Such a user may have one or more roles in the organization.

As used herein a "role" is intended to encompass any role that a person or user may have in an organization, non-limiting examples being an author, a reviewer, an approver, a coordinator, an owner, an administrator, subject-matter expert (SME), quality assurance (QA), and a manager. For example, the term "reviewer" is intended to mean a user assigned the reviewer role and similarly for other roles.

As used herein an "incident" is intended to encompass any type of event that may happen in the duration of a project, non-limiting examples being any one of a risk, an issue, a problem and a system incident.

Other terms as used herein is intended to retain their normal meaning as understood by a person skilled in the art of project management or quality assurance.

### Background

In an environment where rising regulatory requirements for documenting processes relating to the life cycle of a system, especially in the Life Science industry, it is increasingly important to ensure rigorous management of processes. During the life cycle of a system many different processes are performed. It is important that the tasks relating to these processes are correctly sequenced, performed by qualified users, and satisfactorily documented. This implies high requirements for proper planning, and managing of processes.

Today plans are typically created in flat files, which are stored on the managers' local hard drive or on the projects' individual web-based sites. The plans are often kept in Microsoft Excel, Power Point formats, or at best the plan is created in Microsoft Project with a list of tasks and dependencies to keep track of the project implementation. Typically, documents are shared by sending them as attachment in emails and eventually stored on individual user's private computers with no accessibility and visibility to key stakeholders. This has the drawback of reducing traceability and transparency, while also causing work to unnecessarily be replicated.

The documentation requirements for system implementation in a regulatory environment come from multiple sources in different levels of complexity, and guidance is often non-existent. Even if proper procedures are available they are often difficult to locate which causes users to spend time and effort on non-productive activities wasting resources. The system owner spends time writing and rewriting requirements because there is no guidance in how to formulate this is a correct way. Management spends unnecessary time to get an overview of running processes in the organization. This means that tasks are not correctly sequenced which causes non-productive or even counterproductive activities. Quality Assurance (QA) is unsatisfied with the first review cycles of the documentation. When a document is approved the document is then printed, signed, scanned and uploaded. The document is then sent to other approvers who replicate this process. This amounts to a large waste of resources, such as time, paper, and energy.

Today, many systems are typically involved in managing a product life cycle, sometimes more than 10 different systems are deployed. When 10 separate systems are utilized, information gets fragmented and de-centralized. Typically, each organization, such as departments in a company, will work in different systems adding valuable information about a system life cycle to different databases. A user looking to gain an overview of a system life cycle is forced to gather information in many different systems. Relevant information about a system life cycle might be hidden in a different system than a user is currently in. This means that getting in control of just one system life cycle can take a lot of time. Much time is wasted just by logging in and out of systems. In addition, the cost of maintaining these systems is large. Licenses is paid for 10 IT systems.

In some cases, the wasted time ends up squeezing the testing phase and thereby compromising quality in order to meet the communicated timelines. In other cases, the end result is that the processes in the system life cycle take inappropriately long to complete and become excessively expensive.

### Summary of the invention

The object of the invention thus is to provide a method for managing a system life cycle which alleviates the above-described disadvantages. Particularly a method which simplifies and harmonizes system implementation to provide more efficient system life cycle management, both economically and in terms of time consumption, and both within and across different phases of a system life cycle and within and across organisations and users taking part in the system life cycle. Additionally, a method which reduces or even eliminates repetitive and/or error prone manual activities, which are common in the prior art methods.

It is a further object of the invention to provide a more efficient and less time consuming way to distribute and share project and system documentation within and across organisations and users taking part in the system life cycle.

The invention is based on the concept that the processes involved in managing the life cycle of a system typically can be grouped into separate modules focusing on specific processes. These modules can have synergistic effects when combined with each other. For instance, identified incidents and problems can be referenced to a project relating to changing the feature of a system causing the incidents. This improves the decision making, the documentation and traceability of the project.

In a first aspect of the invention the above and other objects is achieved by means of a method for managing a system life cycle, the method comprising the steps of:
a) choosing a plan template from one or more plan templates created centrally in a first organization, said one or more plan templates each comprising a plurality of module templates and a plurality of task templates,
b) providing specific plan information de-centrally in a second organization,
c) configuring a plan based on the chosen plan template and on the provided specific plan information,
d) configuring, as a part of said plan, a plurality of modules based on said plurality of module object templates and a plurality of tasks based on said plurality of task object templates,
e) defining a plurality of users, associating said users with at least one role of a plurality of roles, and assigning said plurality of users to said plan and/or one or more of said plurality of modules and/or one or more of said plurality of tasks based on said at least one role,
f) configuring an inventory comprising a plurality of inventory items related to each of said plurality of modules and each of said plurality of tasks,
g) detect changes to said plan, particularly to each of said plurality of modules and each of said plurality of tasks, and
h) continuously automatically updating said plurality of inventory items of said inventory based on said detected changes to said plan.

By choosing a plan template from one or more plan templates created centrally in a first organization, said one or plan templates each comprising a plurality of module object templates and a plurality of task templates, the time consuming activities of creating plans, defining modules and tasks will be handled centrally by the system, and a minimal number of manual activities will need to be defined, and will need to be defined only once. The first organization is typically a company, but may also be a private or public corporation, division, sub-division, project group, or a department. The templates may be created and/or managed centrally in the first organization, in particular by authorized users in the first organization. This has the advantage of enabling rapid distribution of best practices throughout the organization. In a computer implemented method, this also has the advantage of saving manual typing time and thus reducing the energy required by a computer.

In more detail, a plan can thus be created from a plan template with expected deliverables list, deadlines, estimated time per activity, dependencies, optimal resource allocation and expected date of Go-Live. Project key performance indicators (KPI) may be made an integral functionality in the plan templates and information export makes data available in a format flexible to further data processing.

Thus, a more efficient system life cycle management, both economically and in terms of time consumption, is provided for.

By providing specific plan information de-centrally in a second organization and creating a plan based on the chosen plan template and on the provided specific plan information, all necessary information may be taken into account when creating the plan, thus providing a tailor-made plan, and the information is made transparent and measurable.

The second organization may be a different organization than the first organization, the second organization may include a part of the first organization, or the second organization may be the same as the first organization, e.g. in a small company the first and the second organization may be the same, while in a large company the first organization may be an executive branch, such as a research leadership group, while the second organization may be a project team.

Thereby, a simplified and harmonized system implementation is achieved, and repetitive and/or error prone manual activities are reduced or even eliminated. The information relates to the specific system or product, that for instance is being developed. The information can be displayed as to prompt the user viewing the information to take an appropriate action, for instance investigating a reported incident regarding the system or product.
By configuring, as a part of said plan, a plurality of modules based on said plurality of module object templates and a plurality of tasks based on said plurality of task object templates, only the modules which are necessary are included in the plan. Thus, the complexity of managing the plan is reduced. The modules may be selected from the group comprising: documentation, project, knowledge, incidents, changes, configurations, deviations, Corrective And Preventive Actions (CAPAs), tests, training and complaints, including management and handling of any of these. In addition to these, other modules known in the art may be included. The choice of these modules are based on the status of the system or produced to be managed, for instance in the development of a product the modules included may be: documentation, project, knowledge, and tests. A product already being sold may include the modules: documentation, knowledge, incidents, changes, configurations, deviations, CAPA, training, and complaints. Modules may be added or removed based on the details of the product or system. Modules may also be added or removed during the course of the system life cycle, for instance the required modules may be different in development of a system than in the maintenance of a system.

By defining a plurality of users, associating said users with at least one role of a plurality of roles, and assigning said plurality of users to said plan and/or one or more of said plurality of modules and/or one or more of said plurality of tasks based on said at least one role, an individual user involved in the project need only be involved in the parts of the project that are relevant for the role assumed in the project. The users defined may be a part of either organization, for example employees of a company.

In this way the respective users associated with a process or a task in a plan may be presented with only the information relevant for that user, which in turn significantly reduces the amount of information to be distributed and to be considered by the user in question. This in turn provides for a simpler and more efficient decision making for the individual users. Thereby, the above-mentioned advantages are improved even further. In particular a considerably simplified and harmonized system implementation is achieved, and a particularly more efficient project management, both economically and in terms of time consumption, and both within and across different phases of a project and within and across organisations and users taking part in the project is achieved.

By configuring an inventory and detecting and taking into account changes as described in steps f), g) and h) above, a centralized management of all modules of a project is achieved, which in turn provides for a considerably simplified and harmonized system implementation.

Alternatively, step f of the first aspect of the invention may instead read as follows:
f) configuring an inventory comprising at least one inventory item, wherein each inventory item is related to a system by associating said inventory item with said plan,

In this alternative first aspect an inventory item is corresponds to a system or product. Each inventory item is associated with a plan. This provides a simple overview of each system in the inventory. The skilled person understands that this alternative first aspect may be combined with other embodiments of the first aspect and may provide obtain similar advantages.

Thus, the solution according to the present invention is promoting collaboration across projects, departments and organizations. Key information is displayed in visual diagrams to get a fast and easy overview of all currently running projects. Drill down functionality enables an overview of the status of individual project, resources and expected key milestones. This allows users to identify areas of improvement.

The thus enabled integrated quality management system combines project management with computerized system validation including expected industry deliverables like procedures, forms and templates. A customized illustration of tasks and dependencies may be obtained and will make it easy for users to understand expectations. Pre-filled and pre-approved system life cycle documentation and plan templates will reduce the workload of users and/or computers, and only project specific information needs to be added. A customized plan and schedule may thus be created with only a few clicks. The project is, due to the provided and continuously updated inventory maintained in the solution according to the present invention. The inventory of the solution according to the present invention may be adapted for sending notifications and display a real time matrix of project statuses and/or pre-defined KPIs.

Also, an individual user involved in the project may by means of the inventory be presented with only that information which is relevant for the role assumed in the project. Thereby the information is made transparent also on an individual plane, thus saving resources both in respect of money and time.

In summary, the method according to the present invention thus generally meets and provides at least some of the following objectives and advantages:
- Delivering the correct information, at the correct time, in the expected level of quality
- Enhanced communication with stakeholders (sponsors, steering committees, auditors, QA)
- Meeting milestones and timelines
- Optimal resource utilization
- Focused cost expectations
- Lower transition and operational costs
- Successful 'hand over' (operations, off shoring, near shoring)

The solution according to the present invention integrates all required life cycle processes into one solution. Expected information entered by the user is indicated by the solution. The need for only one solution, instead of the previous need for a solution for each module, drives down the costs considerably. Furthermore, an integrated system improves the scalability of the system. Modules can be added and removed as needed.

Delivering an already validated solution cloud based, enables the business to utilize the solution immediately instead of having to consider implementation cost, and validation cost of each system. In a short time frame and with reduced risk it is possible to evaluate the immediate and long term and continuous benefit of the solution to the organization. Delivering the solution with availability through mobile devices enables the possibility to ensure full governance and be proactive even without the users being near a conventional computer.

In an embodiment the method further comprises any one or more of the steps of:
displaying the inventory to a user, optionally based on a role associated with said user,
manually editing and/or updating said inventory and/or said inventory items, preferably where the editing is restricted based on a role associated with said user,
editing status of an inventory item,
providing each inventory item of the plurality of inventory items with a list of events associated with the inventory item, and
displaying an inventory item status of at least one inventory item.

Thereby, an individual user involved in the project may be presented with only that information which is relevant for the role assumed in the project in a particularly simple and easily understandable manner. This in turn provides for a considerably easier system life cycle management and thus decision making for all types of users alike.

In an embodiment each inventory item of said plurality of inventory items may comprise one or more of: a status of the inventory item, an indication of users related to the inventory item, a deadline, an initiation date, and a link to associated information.

In an embodiment the method further comprises the steps of creating a plurality of sub-modules, and assigning said plurality of sub-modules to said plurality of modules and/or said plurality of tasks of said plan.

By grouping processes in sub-modules, storage space, processing power and energy can be saved.

In a further embodiment the method further comprises the step of assigning said plurality of users to one or more of said plurality of sub-modules based on said at least one role.

Thereby, an individual user involved in the project may be presented with only that information which is relevant for the role assumed in the project in connection with a particular sub-module. This in turn further reduces the amount of information to be distributed and to be considered by the user in question.

Said sub-modules may be chosen from a group comprising: a feedback sub-module, a review sub-module, an approval sub-module, a Quality Assurance (QA) sub-module, a post-approval sub-module and a signature sub-module.

In an embodiment the method is a computer implemented method further comprises the step of assigning said plurality of users to one or more of said plurality of sub-modules based on said at least one role, wherein the plurality of sub-modules at least comprises a signature sub-module.

By having a signature sub-module in a computer implemented method provides the advantage that the tedious task of printing a document, signing it, and uploading it again, is alleviated.

Said plurality of modules may be chosen from a group comprising: a document module, a project progress module, a knowledge module, an incident module, a change module, a configuration module, a deviation module, a Corrective And Preventive Action (CAPA) module, a test module, a training module and a complaint module.

In an embodiment said plurality of modules comprises all, preferably at least 6, more preferably at least 5, even more preferably at least 4, most preferably at least 3 of the modules from a group comprising: a document module, a project progress module, a knowledge module, an incident module, a change module, a configuration module, a deviation module, a Corrective And Preventive Action (CAPA) module, a test module, a training module and a complaint module.

By having more modules, a larger portion of processes involved in the system life cycle can be covered by the method, this has the advantage of increasing the synergistic effects by integrating more modules. These synergistic effects may include a greater degree of cross referencing between modules to provide a more complete overview by the inventory. This further reduces the time spent by users gaining an overview and reducing the waste of resources, such as time spent logging in and out of systems, and physical paper use for the remaining portion of processes not covered by the method.

Said roles may be chosen from a group comprising: an author, a reviewer, an approver, a coordinator, an owner, an administrator and a manager.

In an embodiment the method further comprises the step of defining at least one organization and assigning said at least one organization to said plan.

Thereby it becomes possible to track the ownership of each project to be managed. Also, it becomes possible to assign users to the at least one organizations and thereby keep track of the user-organization relationships. This improves the transparency and simplifies the decision making even further.

In a second aspect of the invention the above and other objects is achieved by means of a method for managing a plurality of system life cycles, the method comprising the steps of:
i) performing the method according to the first aspect of the invention,
ii) repeating step i) at least one time thus creating at least two plans,
iii) for each of said at least two plans, configuring an inventory comprising a plurality of inventory items related to each of said plurality of modules and each of said plurality of tasks,
iv) for each of said at least two plans, detect changes to said plan, particularly to each of said plurality of modules and each of said plurality of tasks, and
v) for each of said at least two plans, continuously automatically updating said plurality of inventory items of said inventory based on said detected changes to said plan.

Alternatively, in the second aspect of the invention, the step iii) may instead read as follows:
iii) for each of said at least two plans, configuring an inventory item of said inventory by associating each inventory item with the respective plan of said at least two plans, wherein each inventory item is related to a system,

By performing a method according to a second aspect of the invention it is possible to create a plurality of plans for a plurality of inventories/inventory items allowing the management of a plurality of system life cycles.

In an embodiment the method according to the second aspect of the invention further comprises performing one or more steps according to the detailed embodiments of the method according to the first aspect of the invention.

In an embodiment the method according to the first or second aspect of the method is a computer implemented method. Thereby it can be ensured that documents or records are kept safe, and that they are accessible by any user, even when not in the same geographical location.

In a third aspect of the invention the above and other objects is achieved by means of a system for managing a system life cycle and comprising a data processing device, a computer readable medium and an input unit, the computer readable medium comprising:
a list configured to comprise one or more plan templates created centrally in a first organization, said one or more plan templates each comprising an associated list of module templates and an associated list of task templates,
an inventory template, and

instructions configured for execution at said data processing device such as to cause the data processing device to:
a) request and receive via said input unit a user selection and in reaction to said user selection retrieve a plan template from said list comprising one or more plan templates,
b) request and receive via said input unit user input comprising specific plan information provided de-centrally in a second organization,
c) configure a plan based on the chosen plan template and on the provided specific plan information,
d) configure, as a part of configuring said plan and based on the provided specific plan information, a plurality of modules based on said list of module object templates and a plurality of tasks based on said list of task object templates,
e) define a plurality of users, based on said user input associating said users with at least one role of a plurality of roles, and assign said plurality of users to said plan and/or one or more of said plurality of modules and/or one or more of said plurality of tasks based on said at least one role,
f) configure an inventory comprising a plurality of inventory items related to each of said plurality of modules and each of said plurality of tasks,
g) detect changes to said plan, particularly to each of said plurality of modules and each of said plurality of tasks, and
h) continuously and automatically update said plurality of inventory items of said inventory based on said detected changes to said plan.

By providing a system for managing a system life cycle as described above the time spent on managing a system life cycle and thus the energy consumed by the data processing device may be reduced. In addition, since the system detects changes in each module a user does not need to navigate to each module to find the most recent information. The inventory provides an overview of the tasks, activities or processes associated with the user allowing the user to focus on the tasks that requires attention. This reduces non-productive or even counterproductive time since the system ensures that tasks, processes and/or activities are executed in sequence according to the plan.

In an embodiment the system according to the third aspect of the invention further comprising a display unit, and wherein the instructions are further configured to cause the data processing device to:
display, on the display unit, the inventory to a user, optionally based on a role associated with said user, and/or
receive, via said input unit, editions and/or updates for said inventory and/or said inventory items, and edit and/or update said inventory and/or said inventory items based on said received editions and/or updates, preferably where the editing and/or updating is restricted based on a role associated with said user, and/or
receive status information via said input unit and based on said status information edit the status of an inventory item, and/or
provide each inventory item of the plurality of inventory items with a list of events associated with the inventory item, and/or
display, on the display unit, an inventory item status of at least one inventory item.

By providing a system as described above it is ensured that information contained in the system is up-to date ensuring that information in the system is well defined. This reduces the time spent by users finding the most recent information.

Alternatively, step f of the third aspect of the invention may instead read as follows:
f) configuring an inventory comprising at least one inventory item, wherein each inventory item is related to a system by associating said inventory item with said plan,

In this alternative first aspect an inventory item is corresponds to a system or product. Each inventory item is associated with a plan. This provides a simple overview of each system in the inventory. The skilled person understands that this alternative first aspect may be combined with other embodiments of the first aspect and may provide obtain similar advantages.

In an embodiment the system according to the third aspect of the invention, wherein each inventory item of said plurality of inventory items may comprise one or more of:
a status of the inventory item,
an indication of users related to the inventory item,
a deadline,
an initiation date, and
a link to associated information.

By providing a system as described above the relevant information regarding each user is displayed, this allows a user to gain an overview of relevant information in relation to an inventory. Relevant information is for instance the status of each inventory, tasks and their status associated to said user, or deadlines for each task item.

In an embodiment the system according to the third aspect of the invention, wherein said one or more module templates comprise an associated list of sub-modules, and wherein the instructions are further configured to cause the data processing device to:
create, based on the provided specific plan information, a plurality of sub-modules, and assigning said plurality of sub-modules to said plurality of modules and/or said plurality of tasks of said plan.

Thereby, processes which may be in included in more than one module, may be grouped in a sub-module. This reduces the amount of processing power required to run the instructions.

Said sub-modules may be chosen from a group comprising: a feedback sub-module, a review sub-module, an approval sub-module, a Quality Assurance (QA) sub-module, a post-approval sub-module and a signature sub-module.

A signature sub-module is configured for allowing signing documents with an electronic signature and provides the additional advantage that the tedious task of printing a document, signing it, and uploading it again, is alleviated. This streamlines the approval process and saves resources, such as time, paper, and money.

In an embodiment the system according to the third aspect of the invention, wherein the instructions are further configured to cause the data processing device to:
assign said plurality of users to one or more of said plurality of sub-modules based on said at least one role, and/or
request and receive via said input unit a user input and in reaction to said user input create an organization and assign said organization to said plan.

Thereby, an individual user involved in the project may be presented with only that information which is relevant for the role assumed in the project in connection with a particular sub-module. This in turn further reduces the amount of information to be distributed and to be considered by the user in question.

It is noted that the invention relates to all possible combinations of features recited in the claims.

### Brief description of drawings

This and other aspects of the present invention will now be described in more detail, with reference to the appended drawings showing embodiment(s) of the invention.
Fig. 1 shows a flow chart illustrating interaction of modules.
Fig. 2 shows a flow chart illustrating the data flow between modules.
Fig. 3 shows a flow chart illustrating the process of creating a plan template.
Fig. 4 shows a flow chart illustrating the process of creating an inventory.
Fig. 5 shows a flow chart illustrating the project module process.
Fig. 6 shows a flow chart illustrating the process of creating a project.
Fig. 7 shows a flow chart illustrating the process of creating a project phase or process.
Fig. 8 shows a flow chart illustrating the process of a project task.
Fig. 9 shows a flow chart illustrating the process of creating a document.
Fig. 10 shows a flow chart illustrating the process of creating an incident.
Fig. 11 shows a flow chart illustrating the process of creating a problem.
Fig. 12 shows a flow chart illustrating the process of creating a change request.
Fig. 13 shows a flow chart illustrating the process of implementing a change request.
Fig. 14 shows a flow chart illustrating the process of creating a configuration.
Fig. 15 shows a flow chart illustrating the process of creating a deviation for realization.
Fig. 16 shows a flow chart illustrating the process of implementing a deviation.
Fig. 17 shows a flow chart illustrating the process of creating Corrective and Preventive Action (CAPA).

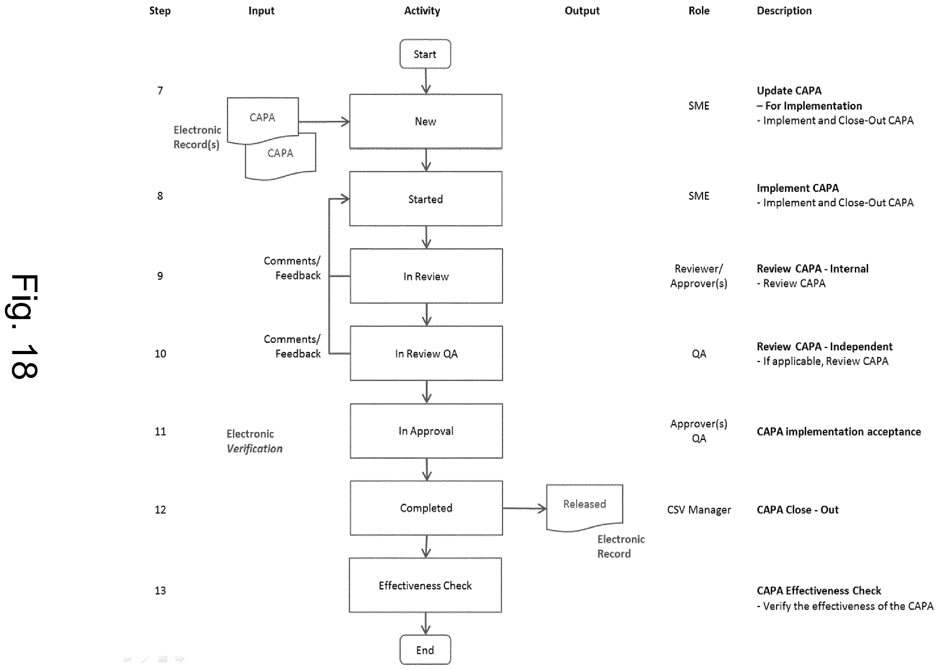

Fig. 18 shows a flow chart illustrating the process of implementing a CAPA.
Fig. 19 shows a flow chart illustrating the process of creating a test specification.
Fig. 20 shows a flow chart illustrating the process of executing a test specification.
Fig. 21 shows a flow chart illustrating the process of creating a training object.

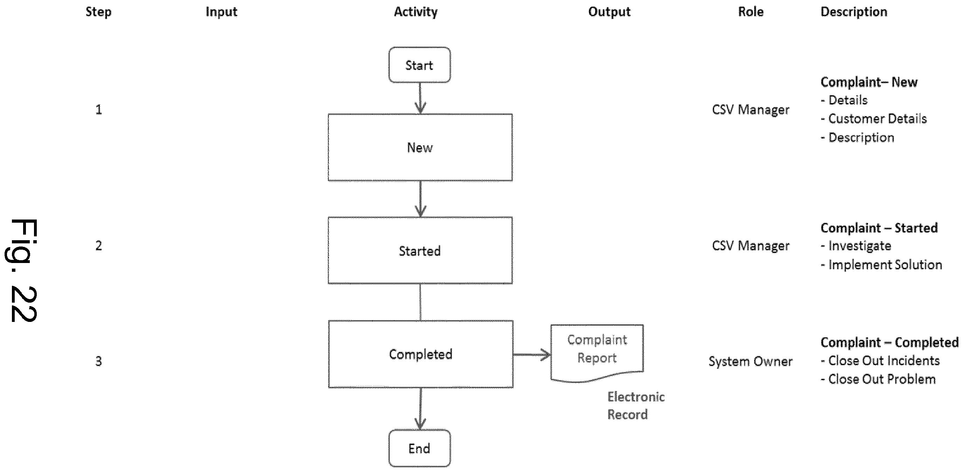

Fig. 22 shows a flow chart illustrating the process of creating a complaint.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

As would typically be the case, the detailed embodiments herein are described as being implemented in a computer. However, parts of the invention could be excluded from a computer. For example, a task template may be created on paper and then uploaded to the computer system. However, it is currently preferred to have as many parts as possible implemented on a computer.

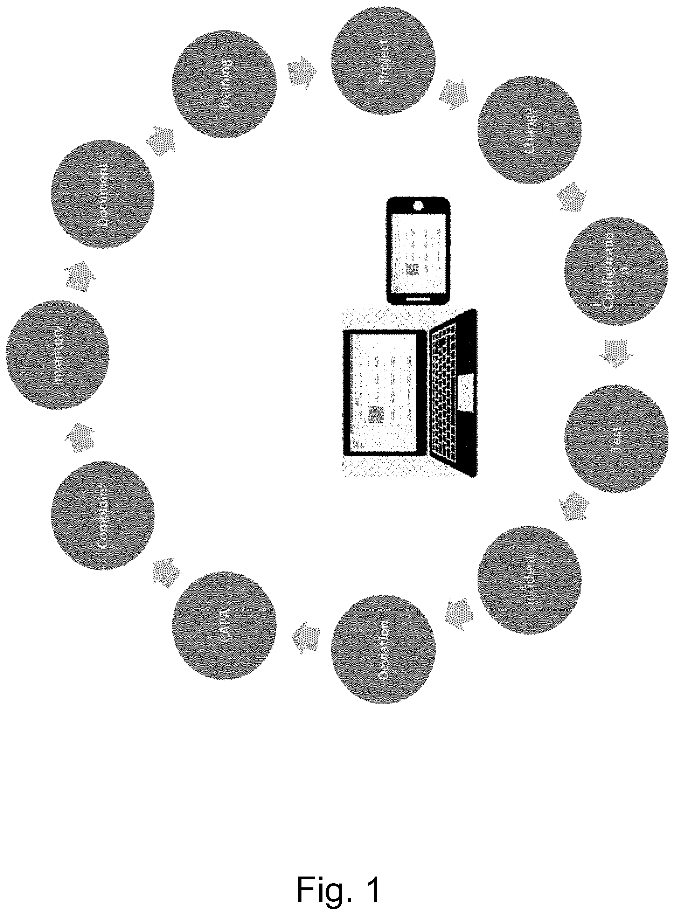

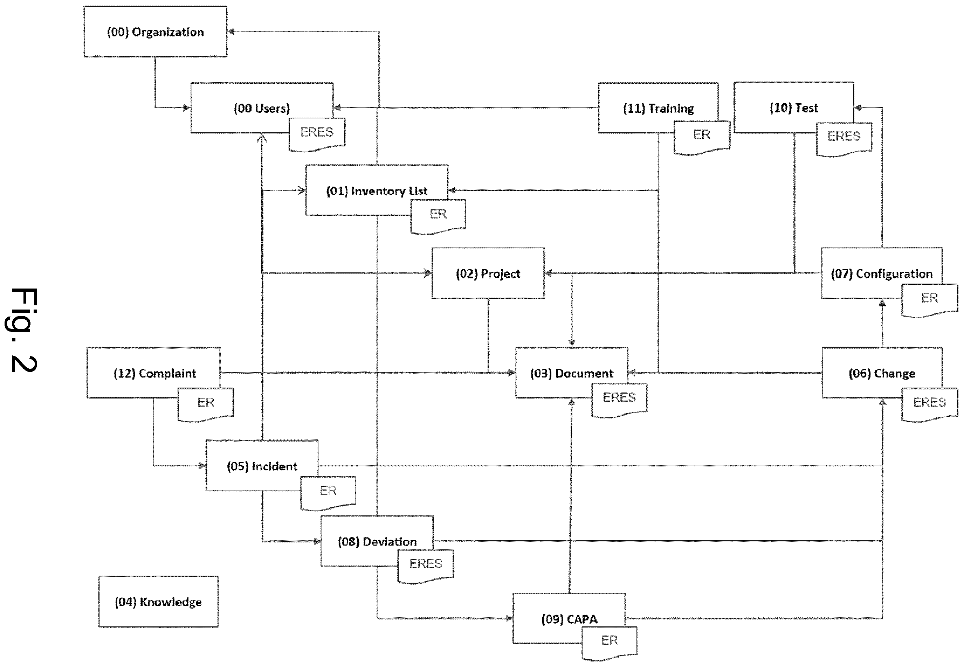

An overview of a fully integrated system is provided in Fig. 1. The system is an integrated system with 12 modules linked or cross referenced. These links are shown in Fig. 2. In practice data is kept within each module, such that no data is really flowing from one module to another. Data that are associated with each other between modules are cross referenced. This means that the inventory object is used in other modules to cross reference or link the modules together. This ensures that data are not copied from a module to another creating unnecessary redundancies, but kept in the relevant module.

Initially a first organization is created. A first organization is for example a company who wishes to manage the life cycle of a pharmaceutical drug in development. A plurality of users is defined, for example employees of the R&D department and the management of the company. These users are assigned at least one role selected from the group comprising: author, a reviewer, an approver, a coordinator, an owner, an administrator and a manager. A user having the administrator role, referred to as the administrator, defines a second organization, for example a research and development (R&D) department of the company. The second organization can be equal to the first organization, as will typically be the default case. The administrator creates the relevant users. Then a user is linked to the second organization.

When an organization and a user exist, a template and an inventory can be created. An inventory references an organization and a user to enforce the role based access. The inventory is the main entry point for information regarding the relevant system.

When an inventory has been created, a number of inventory items can then be added to the inventory. Inventory items are related to the various modules. For instance, a project can be created in the project module creating an inventory item associated with the inventory. In the document module, it is possible to create documents, e.g. system life cycle documents, which belongs to the inventory, and project specific documents, which belong to each individual project or operational activities.

The rest of the modules enables control and sequencing of events during implementation and operation in a system life cycle. For instance, an internal organizational event typically has the following sequence: an 'incident' is created in the incident module then a 'change request' is created in the change module then the 'configuration' in the configuration module and finally a 'test specification' in the test module is created and executed. With each step it is decided whether the event should be moved to the next stage or closed.

In case of an external customer event then a typical sequence of events is as follows: a customer registers a 'complaint' then internally in the organization a 'incident' is created in the incident module and investigation is initiated, if applicable a 'deviation' is raised then a 'Corrective and Preventive Action' is created to close the 'deviation' then if resolution requires a change to the system a 'change request' is created then the 'configuration' in the configuration module and finally a 'test specification' in the test module is created and executed to verify that the solution is implemented correctly.

In Fig. 2, the arrows indicate how the modules are linked which set the role based access for the modules. All modules are at least linked or cross referenced to the incident module and project module. For example, an inventory can be linked to a 'user', 'project', 'document', 'compliant', 'deviation' and a 'change request'. This means that at any given time it will be possible to identity all the incidents relating to one specific inventory. This makes governance and reporting easy. In addition, the source of activities is easily traceable and cross referencing is available in the system, instead of logging in and out of multiple systems to find documented evidence of each task.

During the course of the life cycle of a system the specific modules interacting with the inventory, for instance in the beginning of a life cycle, e.g. during development, project, document, configuration, and test modules may be interacting, while during the sale of a system document, incident and complaint modules may be interacting. Each module is associated with specific sets of tasks, some of these modules comprises similar sets of tasks, these similar tasks are grouped into sub-modules. For instance, a review sub-module handles reviews of tasks, an approval sub-module handles approval of tasks, a signature sub-module handles the electronic signature of documents.

In Fig. 2, most modules produce either an electronic record (ER), or an electronic record with signature (ERES). In this case, the document, deviation, change and test modules require an electronic signature of the electronic record, while the inventory, complaint, incident, CAPA, configuration and training module produces an electronic record. In different regulatory environments different modules may require ER or ERES or none at all, however the setup in Fig. 2 is currently preferred.

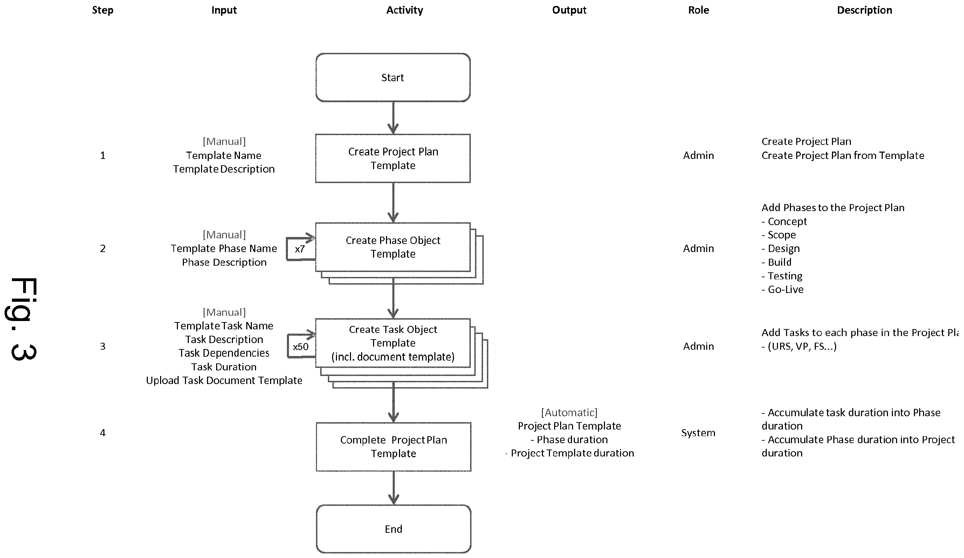

The administrator creates at least one plan template as illustrated in Fig. 3. The administrator provides a template name and a template description. The administrator can then create module object templates. The administrator can provide a module object template name and a module object template description. A plan template can include the different types of modules required by the plan, for example a plan template may relate to the development of a pharmaceutical drug. The administrator may specify the required modules for this specific plan template. The administrator may also update an existing plan template, for instance when new information becomes available such that templates reflect best practices. The administrator chooses at least one module from the group comprising: documentation, project, knowledge, incidents, changes, configurations, deviations, Corrective and Preventive Actions (CAPAs), tests, training and complaints. The choice of these modules are based on the status of the system or produced to be managed, for instance an idea for a product to be developed may include the modules: documentation, project, knowledge, and tests. A product already being sold may include the modules: documentation, knowledge, incidents, changes, configurations, deviations, CAPA, training, and complaints. Modules may be added or removed based on the details of the product or system. Modules may also be added or removed during the course of the system life cycle, for instance the required modules may be different in development of a system than in the maintenance of a system.

The administrator can then create task object templates. The administrator can enter a task name, a task description, task dependencies, and task duration. In addition, a task document template, specifying mandatory and optional activities, can be added. Once the plan template is complete, the duration of the process for each module and the total duration of the plan template can be calculated.

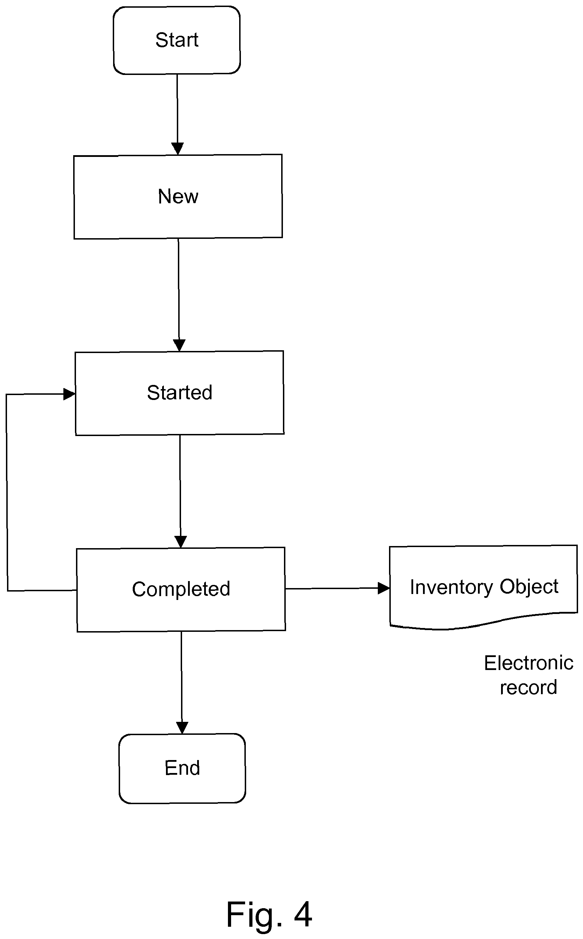

An inventory creator, for instance a user with an assigned inventory owner role or another authorized user, can create an inventory in an inventory list, as illustrated in Fig. 4. The inventory creator provides an inventory name and potentially other information, and releasing the inventory for intended use. An inventory can be used to manage any system or product which are developed, licensed, or owned by the company. An organization may have multiple inventories, as in the case when a company develops multiple products. The inventory can also be used for controlling a Quality Management System. In the inventory list an inventory can be viewed, edited, managed, or deleted. In addition, for each inventory an incident, change request, deviation, or complaint can be created. In addition, an overview of in which modules the inventory is used can be produced, for instance in projects, incidents, change requests, and deviations. The inventory list can be exported.

The inventory creator can then choose an appropriate plan template, created by an administrator, or create a plan. If the inventory creator chooses a plan template, all the standard details are issued, the inventory creator then adds specific information relating to the specific inventory. The process of creating an inventory may be repeated for as times as desired. An inventory creator can create one or more inventories.

This information may include assigning users, having relevant roles, to the various tasks or processes. The roles may be an author, a reviewer, an approver, a coordinator, subject-matter expert (SME), quality assurance (QA), and/or a manager. Preferably each user only performs one role in relation to a task to assure the quality of the performed task or process. The access to the different parts of the inventory or even the whole of the inventory is restricted based on the roles of the users. Only users authorized and assigned to relevant processes, tasks or modules related to the inventory, has access to draft information. When documentation is released it will become available to others.

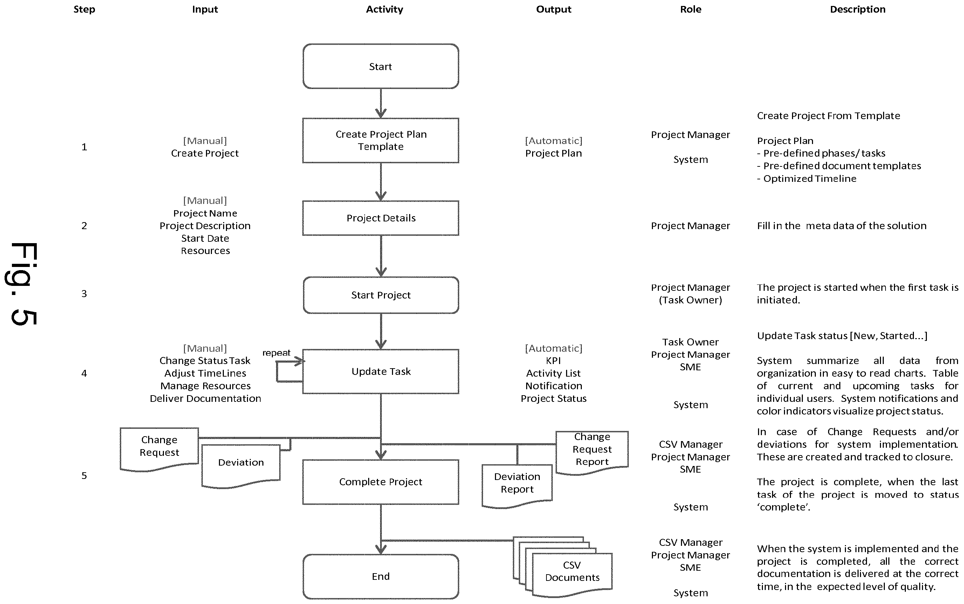

A project creator, for instance a user with an assigned project manager role or another authorized user, can create a project either from a template, created by an administrator, or create a project without a template. The process is illustrated in Fig. 5. If the project is created from a template, then phases, processes, and/or tasks are predetermined, any document templates associated with the plan/project template is also associated with the project, and a time-line is automatically provided.

The project creator provides project information such as a project name, a project description, and a start date. The project creator can then assign users to roles relating to the tasks and processes of the project, for instance a user can be assigned as task owner of a specific task. This could also be predetermined by the template. The project can be edited, for instance by the manager or another authorized user. The project can be published to allow tracking of the project.

The project is controlled by sequencing of events. The task owner is responsible for the initial activities in the task, and then the work or document will be sent to review by internal users and afterwards to an external review if applicable.

Relevant information is summarized in charts, for instance a Gantt chart showing the progress of a task, a process, and/or a project, a chart showing the number of tasks, processes, and/or projects currently on time, on quality, needs attention, overdue, canceled, or on-hold. Notifications are provided, for instance to remind of upcoming deadlines.

During the course of the project, additional modules may interact with the project, for instance a change request relating to the project creates a task which is linked in the project module. These additional tasks are tracked to closure. The project is complete when the last task relating to the project is moved to 'complete' status.

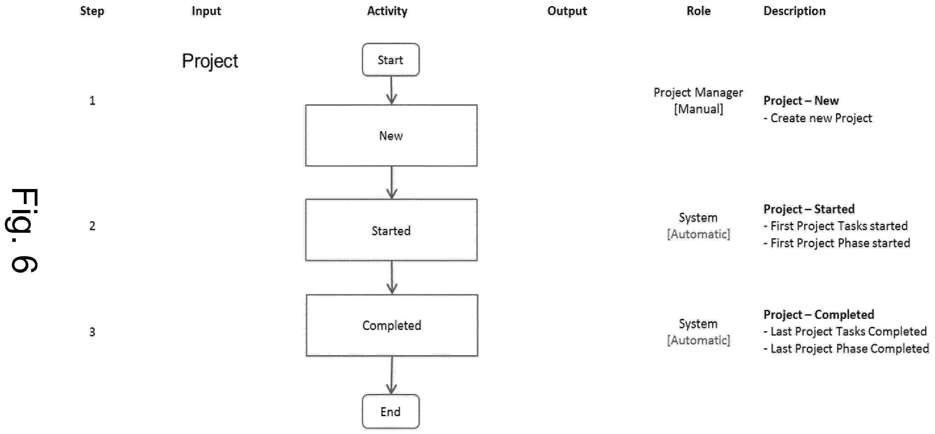

A project is a collection of phases, processes, and/or tasks. A project is started when the first task in the project is initiated and a phase is completed once the last task in the project has been completed. This is illustrated in Fig. 6.

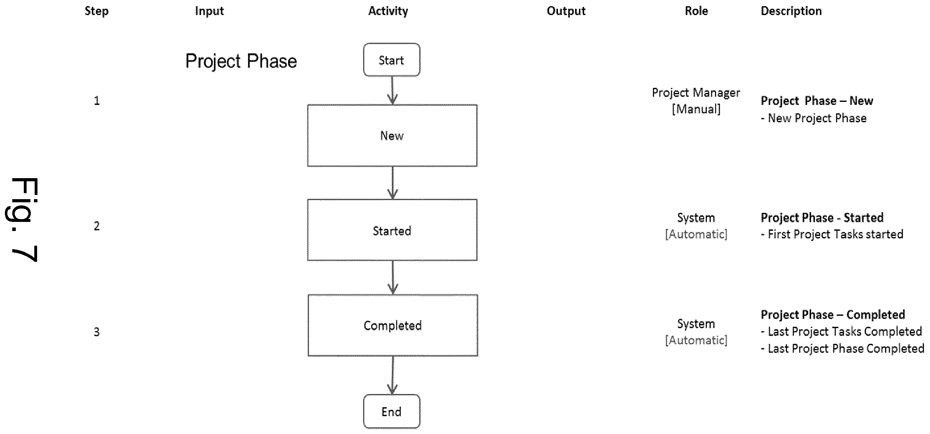

The project may comprise different phases or processes which is a collection of associated tasks. A phase or process is started when the first task in the phase is initiated and a phase is completed once the last task in the phase has been completed. This is illustrated in Fig. 7.

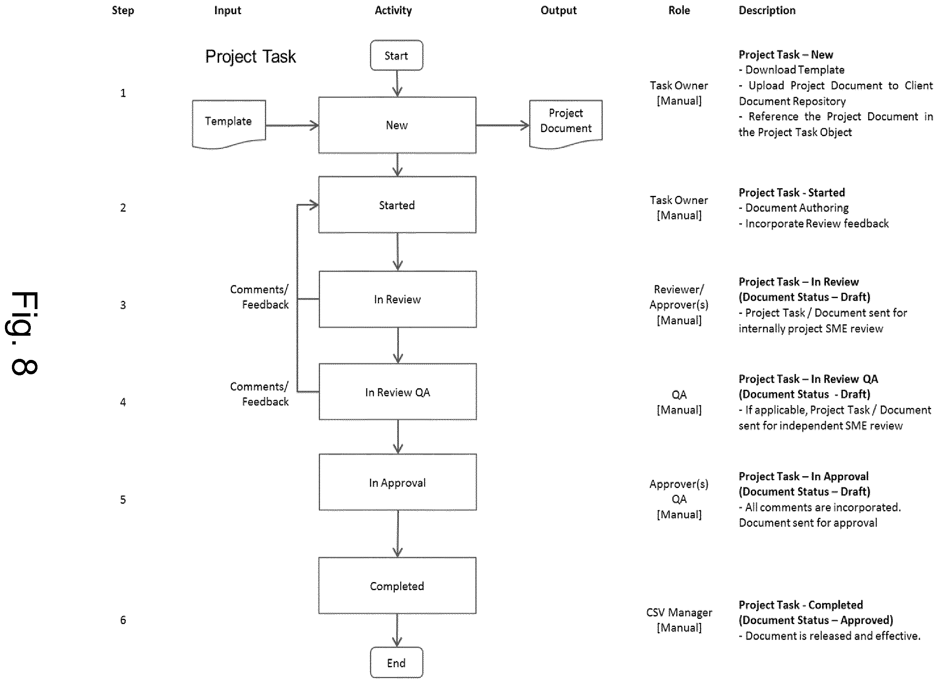

The task process is illustrated in Fig. 8. A task can be linked to a document for controlled creation, review and approval. If the task was created from a template, then this document created from the associated document template and the document is assigned a 'draft' status. The task can be initiated once a user has been assigned as a task owner. The task owner can update the task, for example by changing the status of the task, adjusting timelines, managing resources, delivering documentation. When the task is initiated the task status changes to 'started'. When the task is ready for review the task owner can change the status of the task to 'in review'. In this status the review sub-module is activated. A reviewer or approver is then assigned to the task. If applicable the task/document can be sent for internal subject-matter expert (SME) review. The reviewer or approver can then either send the task back to the 'started' status, preferably with feedback/comments within the feedback sub-module, alternatively send the task to the 'in review QA' status. In this status the QA sub-module is activated, in which Quality assurance (QA) is assigned. In this sub-module it is decided by QA if the task/document is to be sent for independent subject-matter expert (SME) review. QA can then either send the task back to 'started' status, preferably with comments/feedback within the feedback sub-module, or send the task to 'in approval' status. In this status the approval sub-module is activated. An approver is assigned to the task, and has the final responsibility of evaluating if the task has been completed to satisfactory quality.

The document or documentation module handles documents, for instance a document linked to a task. More specifically the document module is a way of controlling documentation creation and collaboration within and between organizations and users. The documentation is version controlled, this means that users are always working on the latest version of the file. The users involved in the release of the document will always know where to find it in the centralized location.

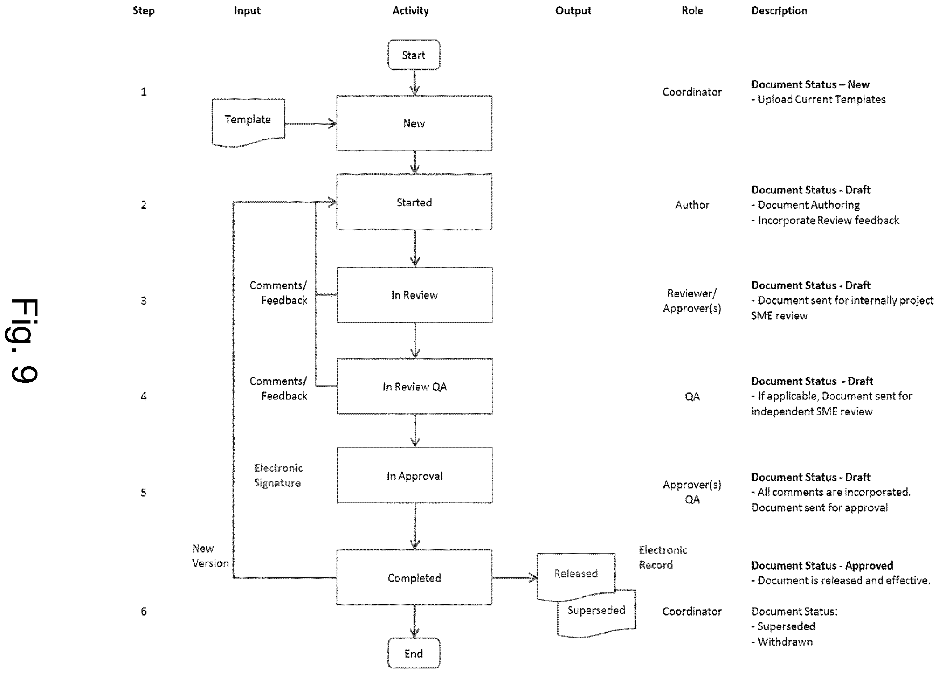

The document can be created from an existing document template or the document created can form a new document template. Document templates are used in many of the modules herein described for example in the project module to document the project tasks, or in the test module a document template can provide the starting point for documenting and logging test results. Creation of a document is started by an author thereby creating a document task. The document task can follow the same status sequence as a task, for instance in the project module. In addition, users with relevant roles, such as reviewer, approver, subject-matter expert etc., is assigned to the appropriate task status, such as 'in review', 'in review QA', 'in approval'. A document has the document status 'draft' from creation to approval or rejection of a document. The document is assigned an appropriate version number, for instance v0.1, v0.2. The process is illustrated in Fig. 9. The documentation is controlled by checking out documents when working on them and checking in documents when they are ready for review. The sequencing of events and segregation of duties during document creation is controlled by linking the documents to a task, for instance in the project module. When the document is ready for review it is sent to the next person responsible in the sequencing of event, for instance a reviewer or an approver. By controlling the progress of the project, the documentation will be created, reviewed, and approved. Once approved the document can get published and is assigned an appropriate version number, i.e. v1.0, v2.0. When a new version of a document is required, a new document task is started with the same steps as previously described. An electronic record is produced when the document is approved. Electronic records are documentation that describes the system, changes to the system and reported errors in the system. These electronic records are used to demonstrate control and robustness of the system. Electronic records are presented during an audit, and when initiating sales in different countries markets. Electronic records have specific requirements depending on the jurisdiction, for instance they should be approved, signed, and saved for 10 years. While electronic records could in principle be created for every activity, they are typically only required for subset of the modules. This also has the advantage of reducing the amount of irrelevant information and unnecessary work.

The knowledge module provides a way for users to share experiences and solutions with other users. It is possible to add a comment and respond to an experience or a solution. This way lessons are learned and knowledge is shared across the company instead of each person or project is running into similar situations. The knowledge module is a standalone module, and can reference any module, any activity, any document, and any lessons learned which needs to be shared or can benefit any user of the system. Therefore, there is no link to any of the other modules in Fig. 2.

The incident module provides a manager of 'risks', 'issues', 'incidents' and/or 'problems' compromising the ability to delivering the system on-time, on-budget and on-quality. A 'risk' is a potential 'issue'. The 'risks' and 'issues' can be created by users, for example in an internal project team. A 'risk' or an 'issue' goes from the status 'new' to 'started' and 'completed'.

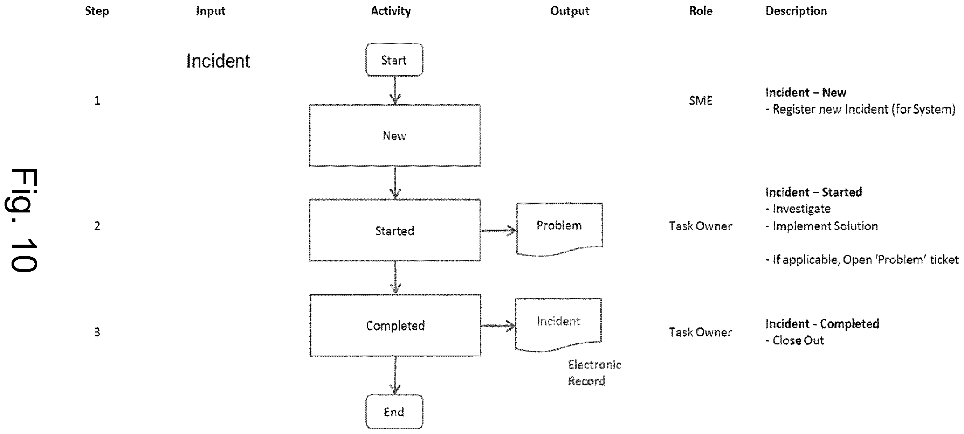

As the person skilled in the art knows, an 'incident' is a single disruption of normal operations. An 'incident' is considered as an electronic record. An 'incident' can for instance be triggered from a customer compliant or a user, for example in an internal project team. An 'incident' goes from the status 'new' to 'started' and 'complete'. The process is illustrated in Fig. 10. When an incident is created, a task owner is assigned. The task owner can for example be part of a first level support team. The task owner investigates if the incident can create a 'problem', a 'change request', if the incident is a system issue, a 'deviation', or if the 'incident' should be moved to 'completed' status and closed.

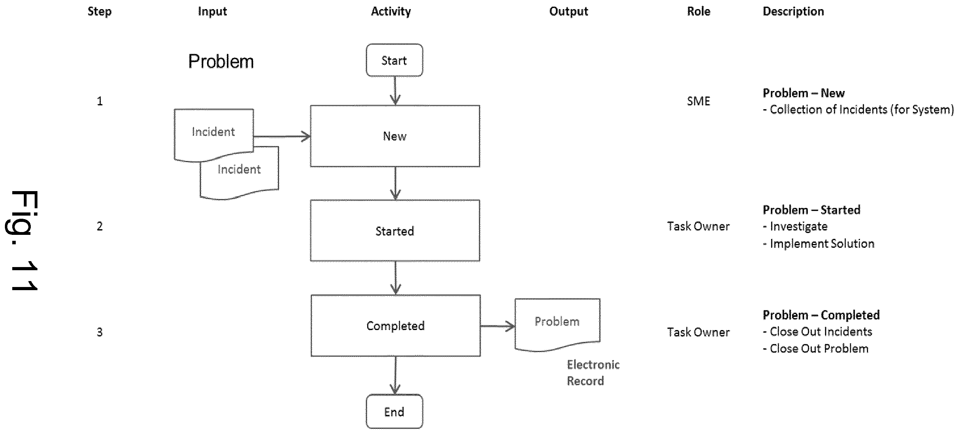

A 'problem' is a collection of 'incidents'. If more users are creating the same 'incident', then it becomes a 'problem'. A 'problem' goes from the status 'new' to 'started' and 'complete'. The process is illustrated in Fig. 11.

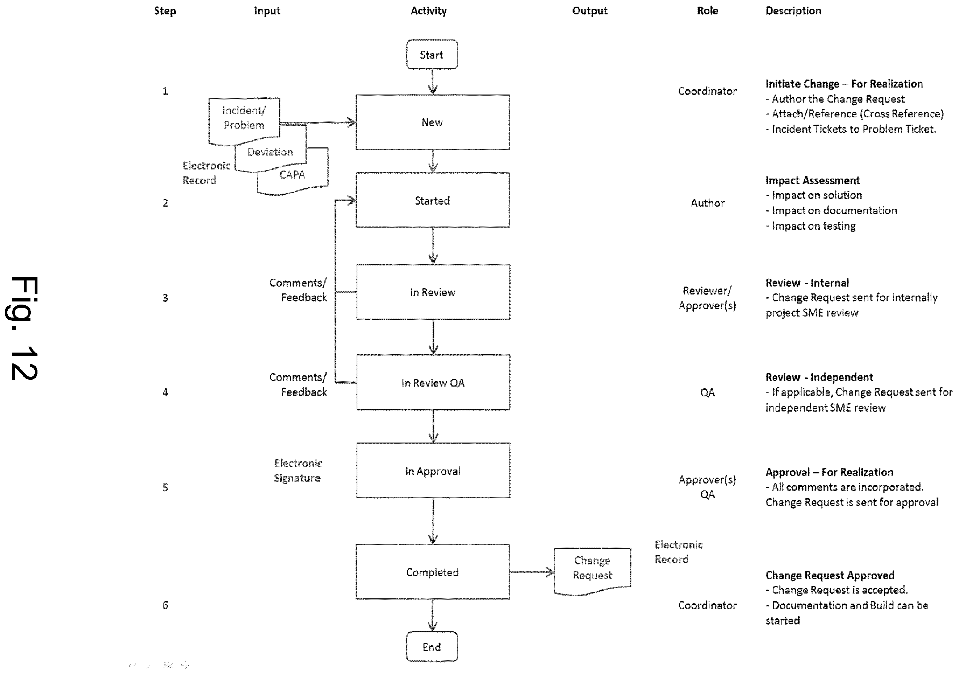

The change or change request module provides a manager of 'change requests'. A 'change request' allows controlled implementation and development of a system. A'change request' can either be raised directly by an internal project team member, through an incident registered by a user. Relevant issues, such as 'incidents' or 'problems' from the incident module, may be cross-referenced in the 'change request', such as to create an overview of the causes of the 'change request'. There are two parts to a 'change request'. First, the 'change request' goes through an impact assessment to solution, documentation and testing. This phase is called 'for realization' and is illustrated in Fig. 12. Here it is determined if the 'change request' will be accepted or rejected. If the 'change request' is accepted, the change will be implemented to the system and testing verifies that the solution is implemented correctly.

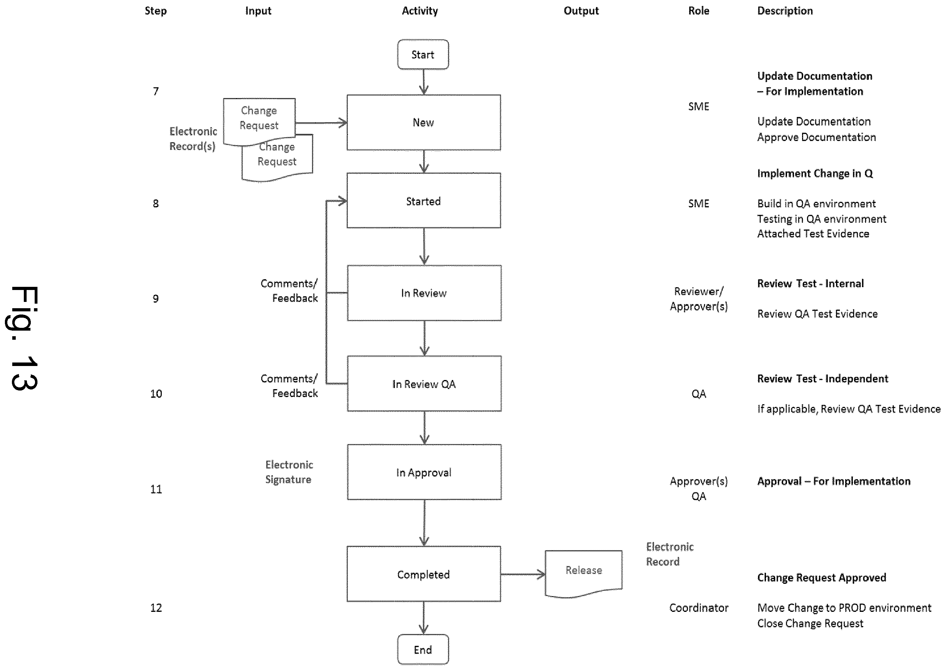

A second acceptance or rejection phase is completed before implementing the change into operational use. This phase is called 'for implementation' and is illustrated in Fig. 13. The sequence of the task statuses in this second phase is similar to the first phase of the'change request'. A 'change request' is considered as an electronic record. When the 'change request' is moved to the 'in approval' status then the key stakeholders either accept or reject the 'change request'. The acceptance or rejection of a 'change request' is confirmed by an electronic signature.

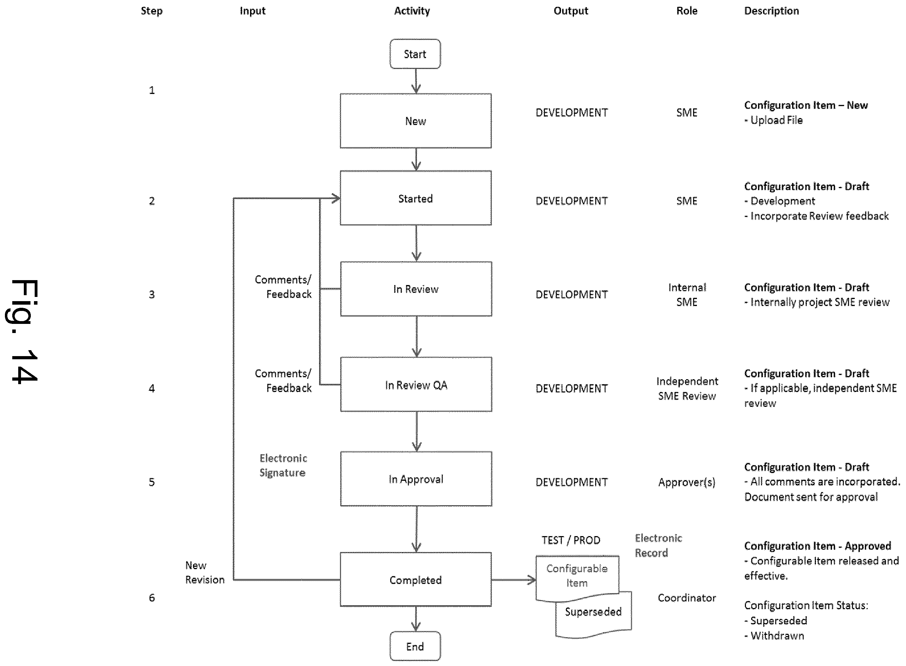

The configuration module allows for configuration items to be controlled. The process is illustrated in Fig. 14

and is similar to document process as illustrated in Fig. 9. Configuration items is defined, such as a specific change to a product or piece of software. Configuration items are version controlled similar to the document module. In line with the document module, configuration items are in 'draft' status during code or configuration development. When the configuration item is approved then it is published, and can then be moved to the test module. A configuration item is an electronic record.

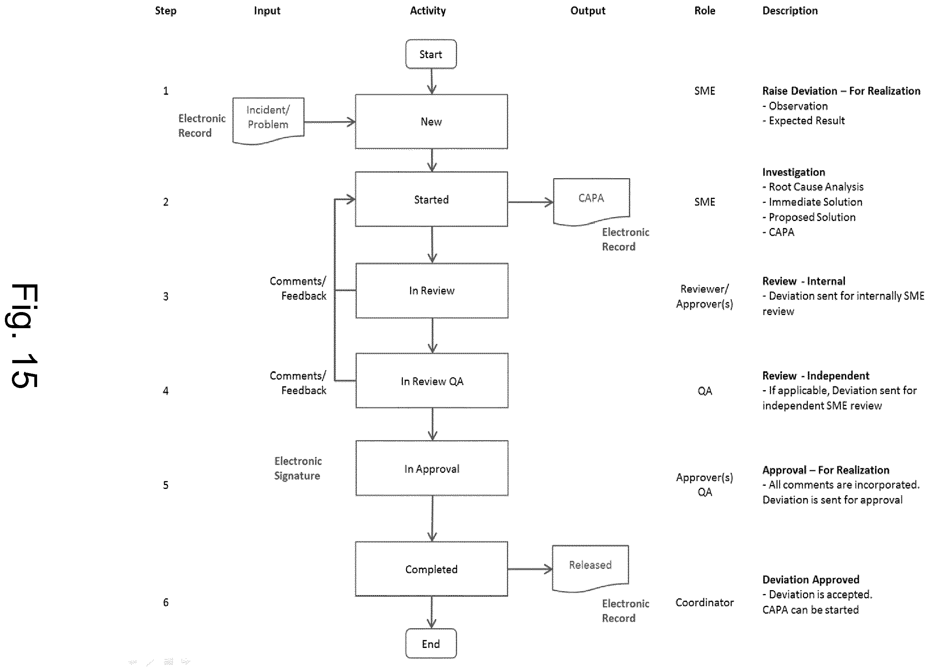

The deviation module allows for handling 'deviations'. A'deviation'is a reported divergence from plan or procedures. A 'deviation' can either be raised directly by an internal project team member, through an 'incident' registered by a system user in the incident module. There are two parts to a 'deviation'. First, the 'deviation' goes through investigation to identify the root cause and then an immediate action and a proposed solution is specified. This phase is called 'for realization' illustrated in Fig. 15, where it is determined if the 'deviation' and Corrective Actions and Preventive Actions (CAPAs) will be accepted or rejected. If the 'deviation' is accepted, the CAPAs will be implemented to the documentation, system and testing verifies that the solution is implemented correctly.

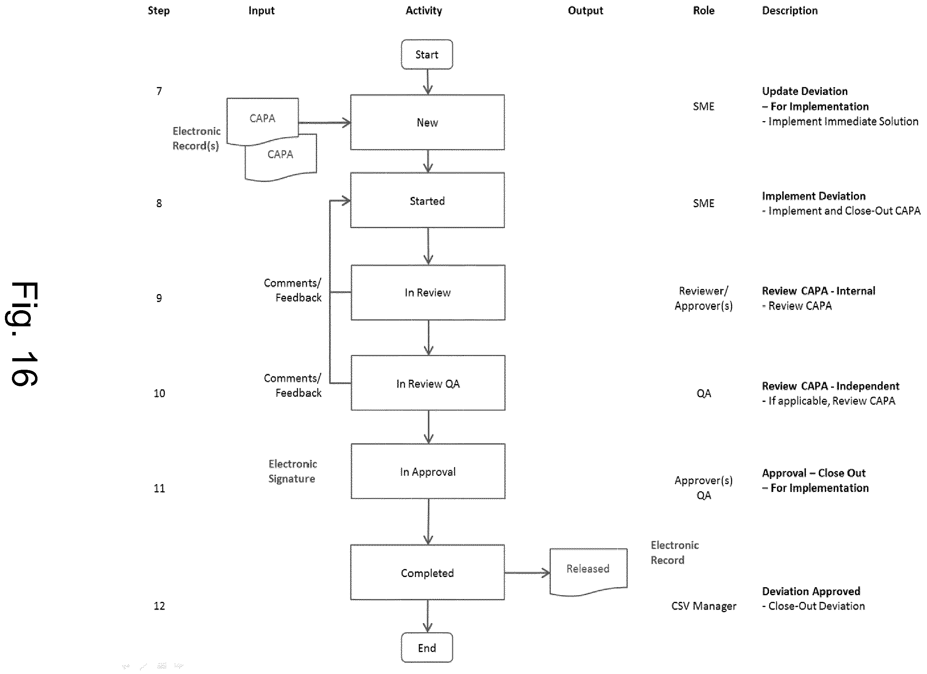

A second acceptance or rejection is completed when all the CAPAs have been tracked to closure. This phase is called 'for implementation' as illustrated in Fig. 16. A 'deviation' is considered as an electronic record. The acceptance or rejection of a 'deviation' is confirmed by an electronic signature.

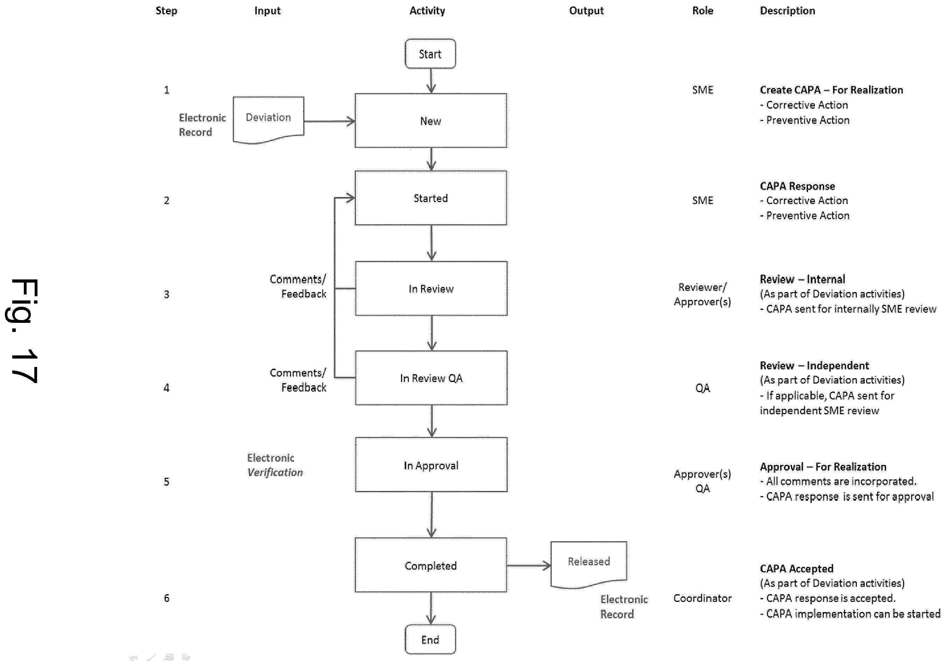

The Corrective Actions and Preventive Actions (CAPA) module is closely related to deviation module. When the Corrective Actions and Preventive Actions is accepted. This is called a CAPA response, the 'deviation' is closed. The CAPA is linked to the 'deviation'. There can be one or more actions needed to close out a 'deviation'. First, the CAPA response goes through evaluation to inspect if the CAPA is closing the deviation as intended. This phase is called 'for realization' as illustrated in Fig. 17.

A second acceptance or rejection is completed when all the CAPAs has been tracked to closure. This phase is called 'for implementation' as illustrated in Fig. 17. A follow-up activity is completed to evaluate if the CAPAs implemented were effective. A CAPA is considered as an electronic record. The acceptance of a CAPA is performed by a verification step by QA. The formal approval of the CAPA is performed by approving the 'deviation'.

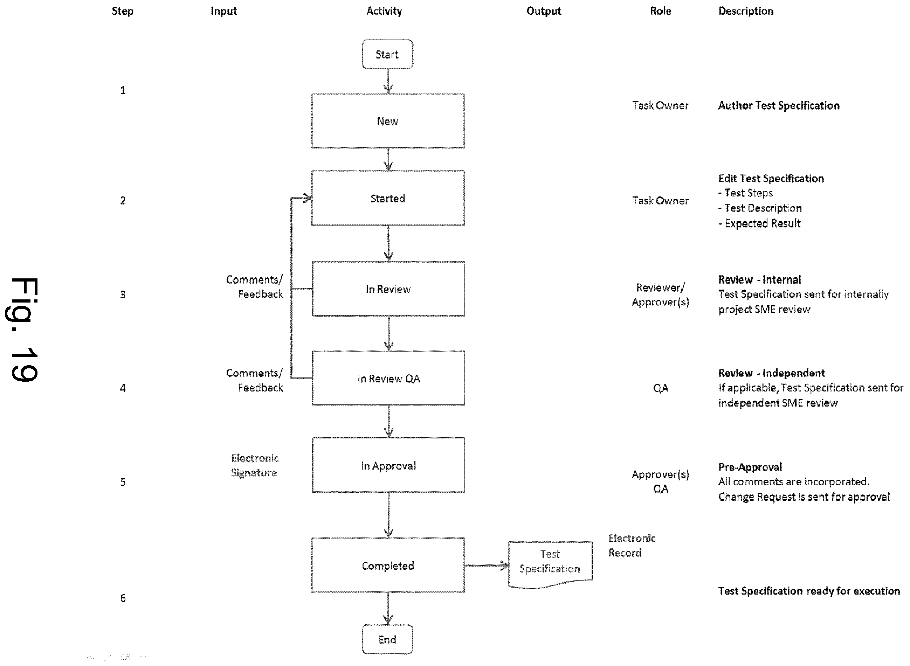

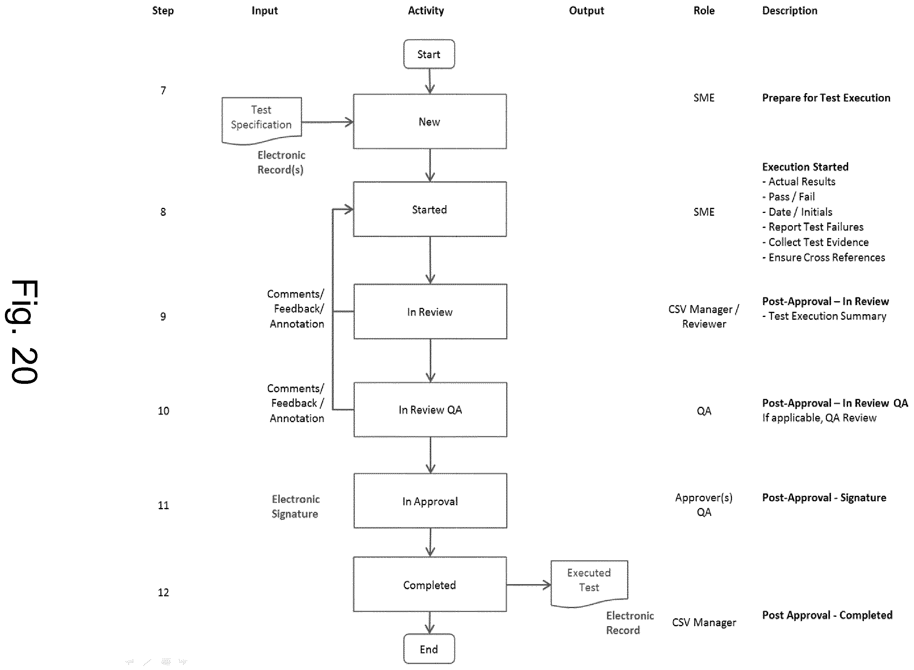

The test module handles test specifications. Test specifications are considered as tasks. A test specification is created by the task owner who specifies the test steps, test description and the expected result. The process then follows a process similar to the document process, except that the test specification reaches a 'pre-approved' status when it has been approved in the 'in approval' status as illustrated in Fig. 19. When the test specification is 'pre-approved' then the test can be executed as illustrated in Fig. 20. A tester, for instance a subject-matter expert, is assigned the test specification. The tester runs through all the applicable test steps and document the result, for instance document screenshots as documented evidence. If there during the test execution needs to be made a correction, it is done with a 'strike through' of previous noted information and indicate what was changed and by whom. Based on the result, the final test execution is assessed to be accepted or re-test required. When the test execution has been completed, the test specification moves to the status 'post approval' and the test evidence is resent for independent review and approval. A test execution is considered as an electronic record. Post-Approval of the test specification is provided with an electronic signature.

The test module provides objective and documented evidence that a solution is fit for purpose. First the test specifications are authored, reviewed and pre-approved by independent reviewers and approvers (approved for execution). A test specification is considered as an electronic record. Pre-approval of the test specification is done with an electronic signature.

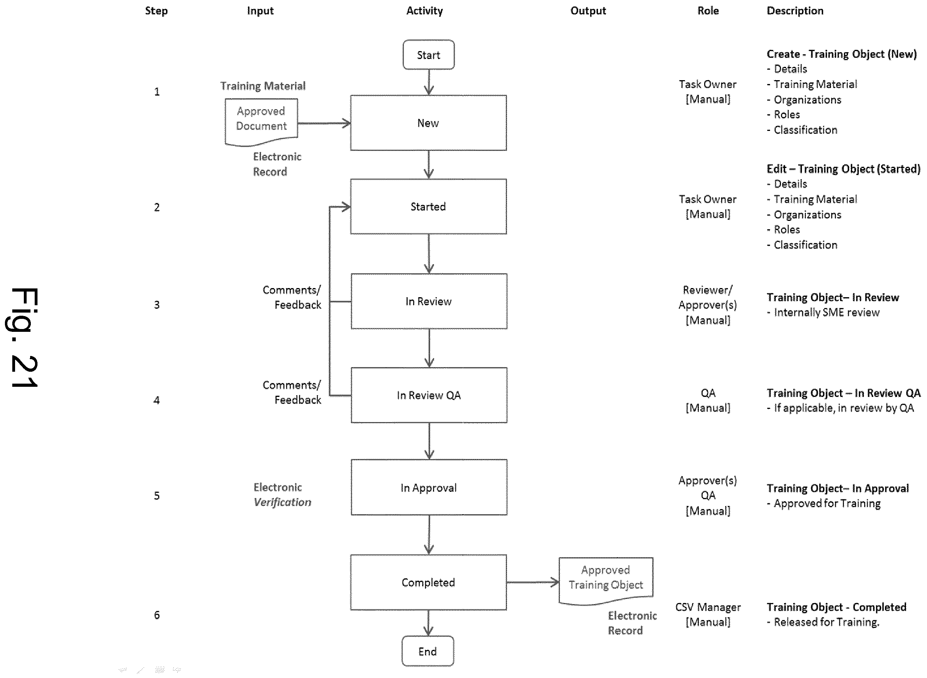

The training module handles training objects and ensures that all users are qualified for their role. Qualification consist of education, experience and training. Training is an ongoing activity during the employment. Training objects are created as illustrated in Fig. 21 in a process similar to the document creation process. Training objects are assigned to appropriate organizations and roles within the organization. Training is then automatically assigned to users who are registered to the specified organizations and roles. Training tracking is established from the training assignments, and. The user indicates that the training has been taken. The training module provides the advantage that it is possible to identify if a user is trained for their role. Training material is considered as an electronic record. Training acknowledgement is considered as an electronic record. Training material is created from already electronically approved documentation in the document module.

The person skilled in the art realizes that the present invention by no means is limited to the preferred embodiments described above. On the contrary, many modifications and variations are possible within the scope of the appended claims.

For instance, it would in principle be feasible to define even more value types and consequently even more values and even more connection rules than the above mentioned in order to provide for even larger variations.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A method for managing a system life cycle, the method comprising the steps of:
a) choosing a plan template from one or more plan templates created centrally in a first organization, said one or more plan templates each comprising a plurality of module templates and a plurality of task templates,
b) providing specific plan information de-centrally in a second organization,
c) configuring a plan based on the chosen plan template and on the provided specific plan information,
d) configuring, as a part of said plan, a plurality of modules based on said plurality of module object templates and a plurality of tasks based on said plurality of task object templates,
e) defining a plurality of users, associating said users with at least one role of a plurality of roles, and assigning said plurality of users to said plan and/or one or more of said plurality of modules and/or one or more of said plurality of tasks based on said at least one role,
f) configuring an inventory comprising a plurality of inventory items related to each of said plurality of modules and each of said plurality of tasks,
g) detect changes to said plan, particularly to each of said plurality of modules and each of said plurality of tasks, and
h) continuously automatically updating said plurality of inventory items of said inventory based on said detected changes to said plan.

2. A method according to claim 1, and further comprising any one or more of the steps of:
displaying the inventory to a user, optionally based on a role associated with said user,
manually editing and/or updating said inventory and/or said inventory items, preferably where the editing is restricted based on a role associated with said user,
editing status of an inventory item,
providing each inventory item of the plurality of inventory items with a list of events associated with the inventory item, and
displaying an inventory item status of at least one inventory item.

3. A method according to claim 1 or 2, wherein each inventory item of said plurality of inventory items may comprise one or more of:
a status of the inventory item,
an indication of users related to the inventory item,
a deadline,
an initiation date, and
a link to associated information.

4. A method according to any one of the above claims, and further comprising the steps of defining a plurality of sub-modules, and assigning said plurality of sub-modules to said plurality of modules and/or said plurality of tasks of said plan.

5. A method according to claim 4, and further comprising the step of assigning said plurality of users to one or more of said plurality of sub-modules based on said at least one role.

6. A method according to any one of the above claims, wherein said plurality of modules are chosen from a group comprising: a document module, a project module, a knowledge module, an incident module, a change module, a configuration module, a deviation module, a Corrective And Preventive Action (CAPA) module, a test module, a training module and a complaint module.

7. A method according to any one of the above claims, wherein said roles are chosen from a group comprising: an author, a reviewer, an approver, a coordinator, an owner, an administrator and a manager.

8. A method according to any one of the above claims, and further comprising the step of defining an organization and assigning said organization to said plan.

9. A method for managing a plurality of system life cycles, the method comprising the steps of:
i) performing the method according to claim 1,
ii) repeating step i) at least one time thus creating at least two plans,
iii) for each of said at least two plans, configuring an inventory comprising a plurality of inventory items related to each of said plurality of modules and each of said plurality of tasks,
iv) for each of said at least two plans, detect changes to said plan, particularly to each of said plurality of modules and each of said plurality of tasks, and
v) for each of said at least two plans, continuously automatically updating said plurality of inventory items of said inventory based on said detected changes to said plan.

10. A method according to claim 9, and further comprising performing the method according to any one of claims 2-8.

11. A system for managing a system life cycle and comprising a data processing device, a computer readable medium and an input unit, the computer readable medium comprising:
a list configured to comprise one or more plan templates created centrally in a first organization, said one or more plan templates each comprising an associated list of module templates and an associated list of task templates,
an inventory template, and
instructions configured for execution at said data processing device such as to cause the data processing device to:
a) request and receive via said input unit a user selection and in reaction to said user selection retrieve a plan template from said list comprising one or more plan templates,
b) request and receive via said input unit user input comprising specific plan information provided de-centrally in a second organization,
c) configure a plan based on the chosen plan template and on the provided specific plan information,
d) configure, as a part of configuring said plan and based on the provided specific plan information, a plurality of modules based on said list of module object templates and a plurality of tasks based on said list of task object templates,
e) define a plurality of users, based on said user input associating said users with at least one role of a plurality of roles, and assign said plurality of users to said plan and/or one or more of said plurality of modules and/or one or more of said plurality of tasks based on said at least one role,
f) configure an inventory comprising a plurality of inventory items related to each of said plurality of modules and each of said plurality of tasks,
g) detect changes to said plan, particularly to each of said plurality of modules and each of said plurality of tasks, and
h) continuously and automatically update said plurality of inventory items of said inventory based on said detected changes to said plan.

12. A system according to claim 11, and further comprising a display unit, and wherein the instructions are further configured to cause the data processing device to:
display, on the display unit, the inventory to a user, optionally based on a role associated with said user, and/or
receive, via said input unit, editions and/or updates for said inventory and/or said inventory items, and edit and/or update said inventory and/or said inventory items based on said received editions and/or updates, preferably where the editing and/or updating is restricted based on a role associated with said user, and/or
receive status information via said input unit and based on said status information edit the status of an inventory item, and/or
provide each inventory item of the plurality of inventory items with a list of events associated with the inventory item, and/or
display, on the display unit, an inventory item status of at least one inventory item.

13. A system according to claim 11 or 12, wherein each inventory item of said plurality of inventory items may comprise one or more of:
a status of the inventory item,
an indication of users related to the inventory item,
a deadline,
an initiation date, and
a link to associated information.

14. A system according to any one of claims 11 to 13, wherein said one or more module templates comprise an associated list of sub-modules, and wherein the instructions are further configured to cause the data processing device to:
create, based on the provided specific plan information, a plurality of sub-modules, and assigning said plurality of sub-modules to said plurality of modules and/or said plurality of tasks of said plan.

15. A device according to claim 14, wherein the instructions are further configured to cause the data processing device to:
assign said plurality of users to one or more of said plurality of sub-modules based on said at least one role, and/or
request and receive via said input unit a user input and in reaction to said user input create an organization and assign said organization to said plan.
